# EUROPÄISCHE PATENTSCHRIFT

(11) **EP 2 740 076 B1**
(45) Veröffentlichungstag und Bekanntmachung des Hinweises auf die Patenterteilung: **16.10.2019**
(21) Anmeldenummer: 12740474.7
(22) Anmeldetag: 10.07.2012
(51) Int. Cl.: G06K 9/72, G06K 9/00, G08G 1/0962

(54) **VERFAHREN ZUR ERKENNUNG VON VERKEHRSZEICHEN**
METHOD FOR RECOGNITION OF TRAFFIC SIGNS
PROCÉDÉ DE RECONNAISSANCE DE PANNEAUX DE SIGNALISATION ROUTIÈRE

(30) Priorität: 04.08.2011 DE 102011109387
(43) Veröffentlichungstag der Anmeldung: 11.06.2014
(73) Patentinhaber: Conti Temic Microelectronic GmbH, 90411 Nürnberg (DE)
(72) Erfinder: ZOBEL, Matthias, 88142 Wasserburg (DE)
(86) Internationale Anmeldenummer: PCT/DE2012/100208
(87) Internationale Veröffentlichungsnummer: WO 2013/017125

(56) Entgegenhaltungen:
- EP-A1- 2 026 313
- EP-A2- 1 508 889
- DE-A1- 19 852 631
- DE-A1-102008 057 675

## Beschreibung

Die Erfindung betrifft ein Verfahren zur Erkennung von Verkehrszeichen, die mindestens ein Haupt- und mindestens ein zugeordnetes Zusatzzeichen umfassen, und eine entsprechende Vorrichtung.

Moderne Fahrerassistenzsysteme werden zunehmend mit einem elektronischen Verkehrszeichenerkennungssystem ausgerüstet, um beispielsweise den Fahrer bei einer Überschreitung der zulässigen Höchstgeschwindigkeit zu warnen. Hierzu nimmt eine Kamera die Umgebung vor dem Fahrzeug auf und liefert entsprechende Bilddaten an eine Bildauswertungsvorrichtung, die mittels eines Algorithmus die Bilddaten analysiert und klassifiziert, um hieraus ein Verkehrszeichen zu identifizieren. Ein solches Verfahren ist z.B. aus der DE 198 52 631 A1 bekannt.

Die Information aus derart erkannten Verkehrszeichen kann anschließend in eine Fahrerassistenzfunktion einfließen, z. B. als Anzeige der aktuell zulässigen Höchstgeschwindigkeit im Kombiinstrument des Fahrzeugs.

Vielfach sind die im Straßenverkehr aufgestellten Verkehrsschilder bzw. -zeichen mit einem oder mehreren Zusatzzeichen versehen, die die Bedeutung des Hauptzeichens konkretisieren oder situativ beschränken.

DE 198 52 631 A1 zeigt eine Vorrichtung und ein Verfahren zur Verkehrszeichenerkennung mit einem digitalen Bildsensor und einer Informationsverarbeitungseinheit.

EP 1508889 A2 zeigt eine Fahrerinformationsvorrichtung mit einer Texterfassungseinheit. Eine Erfassung der Umgebung eines Fahrzeugs kann derart erfolgen, dass eine Kamera zunächst eine Videoerfassung der Fahrzeugumgebung in ihrem Blickwinkelbereich durchführt. Anschließend wird das so ermittelte Bild einer Texterkennung und ggf. auch einer Symbolerkennung unterzogen. Ein erkannter Text einer ersten Sprache kann zur Anzeige für den Fahrer in eine zweite Sprache übersetzt werden.

EP 2026313 A1 zeigt ein Verfahren und System zur Erkennung von Verkehrszeichen mit Zusatztafeln. Mittels einer Bildanalyse wird ein im Kamerabild enthaltenes Verkehrszeichen extrahiert, klassifiziert und dem Fahrer angezeigt. Eine benachbarte Umgebung des Verkehrszeichens wird ebenfalls analysiert, um Zusatzzeichen zu dem Verkehrszeichen zu detektieren. Dem Fahrer wird der Bildausschnitt mit dem Zusatzzeichen oder eine vorgegebene Modelldarstellung des erkannten Zusatzzeichens angezeigt. Die Erkennung des Zusatzeichens kann ein unterstützendes OCR (Optical Chraracter Recognition) Modul umfassen, welches dazu eingerichtet ist, vordefinierte Symbole, Icons oder Piktogramme oder intrinsische Strukturen (Anordnungen von Buchstaben in einer oder mehreren Zeilen, Anzahl von Buchstaben oder Freiräume zwischen ihnen, usw.) zu identifizieren.

WO 2008/145545 A1 zeigt ein Verfahren zur Erkennung von verkehrsrelevanten Informationen, bei dem Daten eines Kamerasensors und Kartendaten eines Navigationssystems interpretiert werden. Zusatzzeichen können hierbei berücksichtigt werden, wenn ihr Inhalt in den Kartendaten des Navigationssystems enthalten ist.

DE 10 2008 057 675 A1 beschreibt ein Verfahren, bei dem nach der Erfassung eines Verkehrszeichens an vorgegebenen Positionen (bezüglich des erfassten Verkehrszeichens) nach einem dem Verkehrszeichen zugeordneten Zusatzzeichen gesucht wird. Die Klassifikation des Zusatzzeichens erfolgt durch Vergleich mit gespeicherten Abbildungen von Zusatzzeichen z.B. unter Verwendung einer Radial-Basis-Funktion.

Nachteilig ist hieran, dass es z.B. für zeitbeschränkende Zusatzschilder beliebig viele Varianten gibt, die entweder alle gespeichert werden müssten oder bei denen man höchstens die generelle Aussage "Verkehrszeichen gilt zeitlich beschränkt" als Zusatzinformation erhält, da die inhaltliche Information des Zusatzschildes nicht erkannt wird.

Da derartige Verkehrszeichenerkennungssysteme Zusatzzeichen rein als Piktogramme behandeln, werden Zusatzzeichen als Ganzes, d.h. als Bildmuster, betrachtet und klassifiziert. Daher fallen beispielsweise alle "Zeitangaben" in ein und dieselbe Klasse, die ohne Zusatzwissen beispielsweise aus einem Navigationssystem nicht näher differenziert werden können.

Der Erfindung liegt die Aufgabe zugrunde, ein Verfahren zur Erkennung von Verkehrszeichen anzugeben, welches eine schnelle und zuverlässige Erkennung von Zusatzzeichen zu Verkehrszeichen ermöglicht und die genannten Nachteile überwindet.

Diese Aufgabe wird durch die Merkmale der unabhängigen Ansprüche gelöst. Vorteilhafte Weiterbildungen der Erfindung ergeben sind aus den Unteransprüchen, wobei auch Kombinationen und Weiterbildungen einzelner Merkmale miteinander denkbar sind.

Ein erfindungsgemäßes Verfahren zur Verkehrszeichenerkennung umfasst die folgenden Schritte:
Es wird mindestens ein Bild einer Fahrzeugumgebung mit einer Kamera aufgenommen.

Aus den Daten des mit der Kamera aufgenommenen Bildes wird das Vorhandenseins und die Klasse eines oder mehrerer Hauptzeichen erkannt.

Das Vorhandensein eines oder mehrerer zu dem oder den erkannten Hauptzeichen zugeordneter Zusatzzeichen(s) wird erkannt.

Das oder die Zusatzzeichen werden mittels eines Mustererkennungsverfahren soweit möglich klassifiziert. Hierbei kann z.B. erkannt werden, dass das Zusatzzeichen eine Distanzangabe (in Metern oder Kilometern) enthält, aber der Distanzwert wird aus dem Mustererkennungsverfahren nicht erkannt.

Sofern die Klassifikation durch das Mustererkennungsverfahren nicht oder nicht vollständig möglich war, wird mittels eines Texterkennungsverfahren der Zusatzzeichentext gelesen und interpretiert, so dass der Informationsgehalt ermittelt ist. Lesen meint hierbei das Erfassen der einzelnen Buch-Stäben oder Ziffern und Interpretieren meint hierbei das Erfassen der Aussage bzw. des Sinngehalts des Texts. Beides zusammen könnte auch wahlweise als Lesen oder Interpretieren bezeichnet werden.

Bei Zusatzzeichen, die einen (teilweise) variierenden Inhalt aufweisen, wird erfindungsgemäß eine automatische, maschinelle Interpretation des variablen Inhalts vorgenommen, da es sich bei dem variierenden Inhalt im Allgemeinen um eine textuelle Information handelt. Variierende bzw. variable Texte sind Zeitangaben, Entfernungsangaben und Gewichtsangaben. Diese können bei verschiedenen Zusatzzeichen variieren.

In einer nicht von den Ansprüchen erfassten Variante des beschriebenen Verfahrens wird nach den drei erstgenannten Schritten (siehe oben) eine Entscheidung getroffen, ob das vorhandene Zusatzzeichen einen variierenden Text umfasst. Diese Entscheidung kann beispielsweise getroffen werden auf Basis einer Vorabklassifikation, bei der auch Zusatzwissen berücksichtig werden kann. Zusatzwissen kann z.B. bedeuten, dass bekannt ist, dass bestimmte Hauptzeichen häufig mit bestimmten Zusatzzeichen kombiniert sind. Beispielsweise ist das Zeichen "Baustelle" auf Autobahnen häufig mit einer Entfernungsangabe auf dem zugeordneten Zusatzzeichen, z.B. "in 2 km" versehen. Falls entschieden wird, dass das Zusatzzeichen einen variierenden Text umfasst, wird der Zusatzzeichentext mittels eines Texterkennungsverfahrens gelesen und interpretiert.

Desweiteren wird eine Entscheidung getroffen, ob das Zusatzzeichen weitere Informationen umfasst. Das können insbesondere weitere Informationen neben einem variierenden Text sein oder auch weitere Informationen auf einem Schild, das keinen variierenden Text enthält. Falls weitere Informationen vorhanden sind, werden die weiteren Informationen mittels eines Mustererkennungsverfahren klassifiziert. Sind dagegen keine weiteren Informationen vorhanden, wird keine Mustererkennung durchgeführt, da nur variierender Text auf dem Zusatzzeichen vorhanden ist, der von der Texterkennung gelesen wird.

Die Reihenfolge der beiden Schritte, in denen jeweils eine Entscheidung getroffen wird, ist nicht festgelegt. So könnte z.B. auch beim Durchführen der Mustererkennung erkannt werden, dass variierender Text auf dem Zusatzzeichen enthalten ist und dieser variierende Text anschließend an die Texterkennung übergeben werden.

Das erfindungsgemäße Verfahren bietet den Vorteil, dass Verkehrszeichen, die sich nur durch Textinhalt von anderen, z.B. gelernten, Verkehrszeichen unterscheiden, zuverlässig und vollständig erkannt werden können. Die Erkennung des Textinhalts ist zudem unabhängig von unterschiedlichen Verkehrszeicheninhalten in verschiedenen Ländern und funktioniert selbst bei verschiedenen Schriftarten/-größen auf Zusatzzeichen. Sie bietet daher eine hohe Flexibilität.

Gemäß der Erfindung erfolgt in einem weiteren Schritt eine Relevanzeinschätzung, bei der der erkannte Text verglichen wird mit Situationsdaten, wie z.B. Uhrzeit, Wochentag, zurückgelegte Entfernung des Fahrzeugs seit Passieren des erkannten Verkehrszeichens mit Zusatzschild und/oder Gewicht des eigenen Fahrzeugs. Die Relevanz des Hauptzeichens, dem das Zusatzzeichen zugeordnet ist, kann somit für eine aktuelle Fahrsituation bestimmt werden.

Auf Basis der Relevanzeinschätzung kann bevorzugt das Hauptzeichen als nicht relevant erkannt werden, wenn die Situationsdaten nicht in den Geltungsbereich des erkannten Texts des zugeordneten Zusatzzeichens fallen. Wenn also beispielsweise eine Geschwindigkeitsbegrenzung aus Lärmschutzgründen nur von 20 - 6 h gilt, kann diese bei einer aktuellen Uhrzeit von 14 h 35 ignoriert werden, weil sie aktuell nicht relevant ist.

In einer vorteilhaften Ausgestaltung der Erfindung wird auf Basis der Relevanzeinschätzung mindestens ein Hauptzeichen als relevant erkannt, wenn die Situationsdaten in den Geltungsbereich des erkannten Texts des Zusatzzeichens fallen.

Gemäß einer bevorzugten Ausführungsform erfolgt eine Überprüfung, ob die Relevanzeinschätzung für eine zu erwartende Änderung der Situationsdaten konstant bleibt oder nicht. Wenn also beispielsweise die genannte Geschwindigkeitsbegrenzung um 19 h 59 passiert würde, dann ist die Änderung der Situationsdaten auf 20 h zu erwarten, die zu einer geänderten Relevanzeinschätzung führt. In diesem Fall wird bevorzugt eine Wiederholung der Relevanzeinschätzung vorgenommen, wenn sich die Situationsdaten ändern.

Vorzugsweise können die Situationsdaten eine aktuelle Geschwindigkeit des Fahrzeugs umfassen, die insbesondere in bekannter Weise aus einer Folge von Bildern derselben Kamera abgeleitet werden kann. Aus dem Verlauf der Fahrzeuggeschwindigkeit kann die zurückgelegte Entfernung des Fahrzeugs seit Passieren des erkannten Verkehrszeichens mit Zusatzschild ermittelt werden. Damit kann die Relevanz von Verkehrszeichen eingeschätzt werden, die aufgrund des Zusatzzeichens nach oder während (auf) einer bestimmten Entfernung gelten. Ein Erkennen eines Stopschilds mit Zusatzzeichen "in 200 m" könnte vorteilhaft auch dazu genutzt werden, dass die Verkehrszeichenerkennung gezielt nach einem Stopschild in diesem Entfernungsbereich "sucht".

Erfindungsgemäß wird beim Auftreten von gleichartigen Schildern auf beiden Seiten einer Straße eine Konsistenzprüfung des erkannten Texts der beiden Zusatzschilder durchgeführt wird. Sofern die Hauptschilder identisch klassifiziert wurden, ist eine Abweichung des Inhalts der Zusatzschilder auf beiden Seiten unwahrscheinlich. Eine Entscheidung, welcher erkannte Inhalt korrekt ist, kann von einer Zuverlässigkeit der Erkennung (Muster und/oder Text) abhängig getroffen werden. Optional kann die Entscheidung durch eine Plausibilitätsprüfung oder durch eine Fusion beider erkannten Inhalte getroffen werden.

Bevorzugt werden weitere Informationen aus einer digitalen Karte, einem Positionsbestimmungsgerät und/oder aus weiteren Fahrzeugsensoren, wie z.B. Regensensor, Fahrdynamiksensoren, Radar oder Lidar berücksichtigt.

Gegenstand der Erfindung ist weiterhin eine Vorrichtung konfiguriert zur Verkehrszeichenerkennung, die eine Kamera zur Aufnahme mindestens eines Bildes einer Fahrzeugumgebung, eine Bildauswertungseinheit und eine Einheit zur Relevanzeinschätzung umfasst. Die Bildauswertungseinheit ist dazu konfiguriert, das Vorhandensein und die Klasse eines oder mehrerer Hauptzeichen sowie das Vorhandensein eines oder mehrerer zu dem oder den erkannten Hauptzeichen zugeordneter Zusatzzeichen aus den aufgenommenen Bilddaten zu erkennen. Dazu weist die Bildauswertungseinheit eine Mustererkennungseinheit und eine Texterkennungseinheit auf. Die Texterkennungseinheit ist dazu konfiguriert, Textinformationen auf dem Zusatzschild zu lesen und zu interpretieren. Die Einheit zur Relevanzeinschätzung ist dazu konfiguriert, den erkannten Text mit Situationsdaten zu vergleichen, um die Relevanz des Hauptzeichens für eine aktuelle Fahrsituation zu bestimmen.

Weitere Vorteile der Erfindung gehen aus der Beschreibung und den Zeichnungen hervor. Ausführungsbeispiele sind in der Zeichnung vereinfacht dargestellt und in der nachfolgenden Beschreibung näher erläutert.
- Fig. 1:: Beispiele für Zusatzzeichen mit Piktogrammen
- Fig. 2:: Beispiele für Zusatzzeichen mit variablem Text
- Fig. 3:: Zusatzzeichen mit Piktogrammen und variablem Text

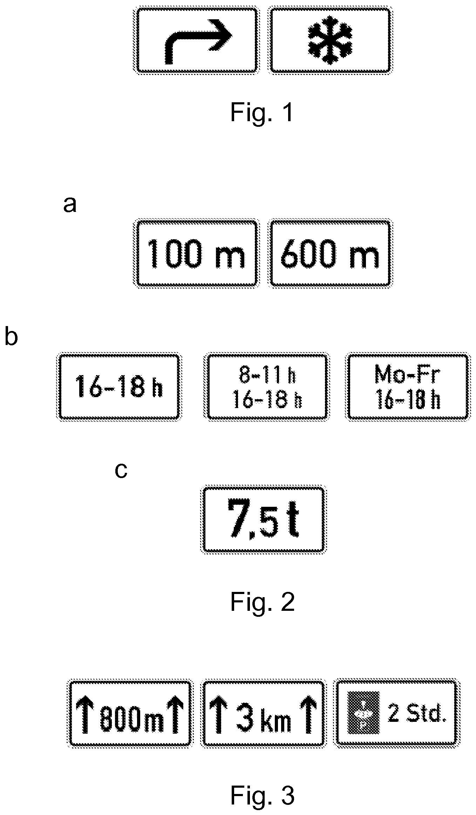

Fig. 1 zeigt zwei Zusatzzeichen mit einem Piktogramm, nämlich "Richtung der Gefahrenstelle, rechtsweisend" und "Gefahr unerwarteter Glatteisbildung". Diese Zusatzzeichen können mittels einer Mustererkennung klassifiziert werden. Das gilt auch für Zusatzzeichen, die nichtveränderliche Textelemente umfassen, z.B. "Ölspur", "Straßenschäden", "bei Nässe" (nicht dargestellt). Auch letztere können mittels einer Mustererkennung vollständig klassifiziert werden, da hier die Buchstaben fix sind und daher als Muster erkannt werden können.

Fig. 2 zeigt dagegen Zusatzzeichen mit variablem Textinhalt: Distanzangaben (Fig. 2a), Uhrzeit/Wochentagsangaben (Fig. 2b) und Gewichtsangaben (Fig. 2c). Hier ist eine große Anzahl an unterschiedlichen Werten bzw. Kombination z.B. aus Wochentagen und Uhrzeiten möglich. Daher können derartige Zusatzzeichen in der Regel nicht mittels einer Mustererkennung vollständig klassifiziert werden. Eine teilweise Klassifikation kann z.B. ergeben, dass die Zusatzzeichen in Fig. 2b alle "Zeitangaben" beinhalten. Eine erfindungsgemäße Texterkennung liefert die Information, dass z.B. die Zeitangabe im linken Zusatzzeichen von Fig. 2b 16-18 h lautet.

Die Zusatzzeichen in Fig. 3 enthalten eine piktogrammartige Darstellung kombiniert mit einem variablen Text. Während das linke und mittlere Zusatzzeichen in Fig. 3 angeben, während bzw. auf welche Entfernung das zugeordnete Hauptzeichen zu beachten, d.h. relevant, ist, gibt das rechte Zusatzzeichen in Fig. 3 den Zeitraum an, für den unter Verwendung einer Parkscheibe das Parken erlaubt ist. Die Mustererkennung erkennt hieran z.B. die Pfeile nach oben (links, mitte) bzw. die Parkscheibe (rechts). Die Texterkennung ermittelt den jeweiligen Gültigkeitsbereich (800 m, 3 km, 2 Stunden). Auf diese Weise erhält die Verkehrszeichenerkennung die vollständige Information des Zusatzzeichens und kann die Relevanz überprüfen.

Wenn beispielsweise das linke Zusatzzeichen aus Fig. 3 im Rahmen einer erfindungsgemäßen Verkehrszeichenerkennung vollständig erkannt, d.h. klassifiziert als "auf 800 Meter", indem die piktogrammartigen Pfeile durch die Mustererkennung erkannt werden und der variable Text "800 m" durch die Texterkennung gelesen und interpretiert wird. Die Verkehrszeichnerkennung verfügt also über die Information, dass das oder die Hauptzeichen, denen dieses Zusatzzeichen zugeordnet ist, auf eine Distanz von 800 Metern ab der Position von Haupt- und Zusatzzeichen gelten.

Diese Information kann nun in einer Relevanzeinschätzung mit einem Situationsdatum verglichen werden, nämlich der zurückgelegten Entfernung des Fahrzeugs seit Passieren des erkannten Verkehrszeichens mit Zusatzzeichen. Da klar ist, dass sich diese Entfernung ändern wird, solange das Fahrzeug fährt, wird die Relevanzeinschätzung wiederholt. Solange diese Entfernung kleiner 800 Meter ist, ist das Hauptzeichen relevant und kann z.B. dem Fahrer des Fahrzeugs angezeigt werden. Sobald eine Entfernung von 800 Metern oder mehr zurückgelegt worden ist, ergibt die Relevanzeinschätzung, dass das Hauptzeichen nicht länger relevant ist und beispielsweise nicht mehr angezeigt wird.

## Patentansprüche

1. Verfahren zur automatischen, maschinellen Verkehrszeichenerkennung mit den Schritten
- Aufnahme mindestens eines Bildes einer Fahrzeugumgebung mit einer Kamera
- Erkennen des Vorhandenseins und der Klasse eines oder mehrerer Hauptzeichen aus den aufgenommenen Bilddaten,
- Erkennen des Vorhandenseins eines oder mehrerer zu dem oder den erkannten Hauptzeichen zugeordneter Zusatzzeichen
- Klassifikation des Zusatzzeichens mittels eines Mustererkennungsverfahrens und Erkennen beim Durchführen der Mustererkennung, dass auf dem Zusatzzeichen Text in Form von Zeitangaben, Entfernungsangaben oder Gewichtsangaben enthalten ist, wobei die Zeitangaben, Entfernungsangaben oder Gewichtsangaben bei verschiedenen Zusatzzeichen variieren können,
- Lesen und Interpretation des Zusatzzeichentexts mittels eines Texterkennungsverfahrens, wobei beim Auftreten von zwei identisch klassifizierten Hauptzeichen auf den beiden Seiten einer Straße eine Konsistenzprüfung des erkannten Texts der beiden Zusatzzeichen durchgeführt wird, wobei im Falle einer Abweichung des erkannten Inhalts der Zusatzzeichen auf den beiden Seiten eine Entscheidung getroffen wird, welcher erkannte Inhalt korrekt ist in Abhängigkeit von einer Zuverlässigkeit der Mustererkennung und/oder der Texterkennung,
- Relevanzeinschätzung, bei der der erkannte Text verglichen wird mit Situationsdaten.

2. Verfahren nach Anspruch 1, wobei auf Basis der Relevanzeinschätzung das Hauptzeichen als nicht relevant erkannt wird, wenn die Situationsdaten nicht in den Geltungsbereich des erkannten Texts des zugeordneten Zusatzzeichens fallen.

3. Verfahren nach Anspruch 2, wobei eine Überprüfung erfolgt, ob die Relevanzeinschätzung für eine zu erwartende Änderung der Situationsdaten konstant bleibt oder nicht und falls nicht eine Wiederholung der Relevanzeinschätzung vorgenommen wird, wenn sich die Situationsdaten ändern.

4. Verfahren nach einem der vorhergehenden Ansprüche, wobei die Situationsdaten eine aktuelle Uhrzeit umfassen.

5. Verfahren nach einem der vorhergehenden Ansprüche, wobei die Situationsdaten einen aktuellen Wochentag umfassen.

6. Verfahren nach einem der vorhergehenden Ansprüche, wobei die Situationsdaten eine aktuelle Geschwindigkeit des Fahrzeugs umfassen.

7. Verfahren nach Anspruch 6, wobei die aktuelle Geschwindigkeit aus einer Folge von Bildern der Kamera abgeleitet wird.

8. Verfahren nach einem der vorhergehenden Ansprüche, wobei die Situationsdaten ein Gewicht des Fahrzeugs umfassen.

9. Verfahren nach einem der vorhergehenden Ansprüche, das weitere Informationen aus einer digitalen Karte, einem Positionsbestimmungsgerät und/oder aus weiteren Fahrzeugsensoren berücksichtigt.

10. Vorrichtung konfiguriert zur automatischen, maschinellen Erkennung von Verkehrszeichen umfassend eine Kamera zur Aufnahme mindestens eines Bildes einer Fahrzeugumgebung, eine Bildauswertungseinheit und eine Einheit zur Relevanzeinschätzung, wobei die Bildauswertungseinheit dazu konfiguriert ist, das Vorhandensein und die Klasse eines oder mehrerer Hauptzeichen sowie das Vorhandensein eines oder mehrerer zu dem oder den erkannten Hauptzeichen zugeordneter Zusatzzeichen aus den aufgenommenen Bilddaten zu erkennen, wobei die Bildauswertungseinheit eine Mustererkennungseinheit und eine Texterkennungseinheit aufweist, wobei die Texterkennungseinheit dazu konfiguriert ist, Textinformationen in Form von Zeitangaben, Entfernungsangaben oder Gewichtsangaben auf dem Zusatzzeichen zu lesen und zu interpretieren, wobei die Zeitangaben, Entfernungsangaben oder Gewichtsangaben bei verschiedenen Zusatzzeichen variieren können, wobei beim Auftreten von zwei identisch klassifizierten Hauptzeichen auf den beiden Seiten einer Straße eine Konsistenzprüfung des erkannten Texts der beiden Zusatzzeichen durchgeführt wird, wobei im Falle einer Abweichung des erkannten Inhalts der Zusatzzeichen auf den beiden Seiten eine Entscheidung getroffen wird, welcher erkannte Inhalt korrekt ist in Abhängigkeit von einer Zuverlässigkeit der Mustererkennung und/oder der Texterkennung, und wobei die Einheit zur Relevanzeinschätzung dazu konfiguriert ist, den erkannten Text mit Situationsdaten zu vergleichen.

## Claims

1. Method for automatically recognizing traffic signs by machine, having the steps of
- recording at least one image of a vehicle environment using a camera,
- recognizing the presence and the type of one or more main signs from the recorded image data,
- recognizing the presence of one or more additional signs associated with the recognized main sign(s),
- classifying the additional sign by means of a pattern recognition method and recognizing, when carrying out the pattern recognition, that the additional sign contains text in the form of time information, distance information or weight information, wherein the time information, distance information or weight information can vary in different additional signs,
- reading and interpreting the additional sign text by means of a text recognition method, wherein, if two identically classified main signs occur on the two sides of a road, a consistency check of the recognized text of the two additional signs is carried out, wherein, in the event of a difference between the recognized content of the additional signs on the two sides, a decision is made regarding which recognized content is correct on the basis of a reliability of the pattern recognition and/or the text recognition,
- relevance assessment in which the recognized text is compared with situational data.

2. Method according to Claim 1, wherein, on the basis of the relevance assessment, the main sign is recognized as not relevant if the situational data do not fall within the scope of the recognized text of the associated additional sign.

3. Method according to Claim 2, wherein a check is carried out in order to determine whether or not the relevance assessment remains constant for an expected change in the situational data and, if not, the relevance assessment is repeated if the situational data change.

4. Method according to one of the preceding claims, wherein the situational data comprise a current time of day.

5. Method according to one of the preceding claims, wherein the situational data comprise a current day of the week.

6. Method according to one of the preceding claims, wherein the situational data comprise a current speed of the vehicle.

7. Method according to Claim 6, wherein the current speed is derived from a sequence of images from the camera.

8. Method according to one of the preceding claims, wherein the situational data comprise a weight of the vehicle.

9. Method according to one of the preceding claims, which takes into account further information from a digital map, a position determination device and/or from further vehicle sensors.

10. Apparatus configured to automatically recognize traffic signs by machine, comprising a camera for recording at least one image of a vehicle environment, an image evaluation unit and a unit for assessing relevance, wherein the image evaluation unit is configured to recognize the presence and the type of one or more main signs and the presence of one or more additional signs associated with the recognized main sign(s) from the recorded image data, wherein the image evaluation unit has a pattern recognition unit and a text recognition unit, wherein the text recognition unit is configured to read and interpret text information in the form of time information, distance information or weight information on the additional sign, wherein the time information, distance information or weight information can vary in different additional signs, wherein, if two identically classified main signs occur on the two sides of a road, a consistency check of the recognized text of the two additional signs is carried out, wherein, in the event of a difference between the recognized content of the additional signs on the two sides, a decision is made regarding which recognized content is correct on the basis of a reliability of the pattern recognition and/or the text recognition, and wherein the unit for assessing relevance is configured to compare the recognized text with situational data.

## Revendications

1. Procédé de reconnaissance mécanisée automatique de panneaux de signalisation, comprenant les étapes suivantes
- enregistrement d'au moins une image d'un environnement d'un véhicule avec une caméra,
- reconnaissance de la présence et de la catégorie d'un ou plusieurs signaux principaux à partir des données d'image enregistrées,
- reconnaissance de la présente d'un ou plusieurs signaux supplémentaires associés au ou aux signaux principaux reconnu(s),
- classification du signal supplémentaire au moyen d'un procédé de reconnaissance de modèle et reconnaissance, lors de l'exécution de la reconnaissance de modèle, que du texte sous forme d'indications de temps, d'indications de distance ou d'indications de poids est présent sur le signal supplémentaire, les indications de temps, les indications de distance ou les indications de poids pouvant varier avec différents signaux supplémentaires,
- lecture et interprétation du texte du signal supplémentaire au moyen d'un procédé de reconnaissance de texte, un contrôle de cohérence du texte reconnu des deux signaux supplémentaires étant effectué dans le cas où deux signaux principaux de classification identique surviennent des deux côtés d'une route, un écart entre les contenus reconnus des signaux supplémentaires des deux côtés entraînant la prise d'une décision en vue de déterminer quel contenu reconnu est correct en fonction d'une fiabilité de la reconnaissance de modèle et/ou de la reconnaissance de texte,
- estimation de la pertinence, lors de laquelle le texte reconnu est comparé avec des données de situation.

2. Procédé selon la revendication 1, le signal principal étant, sur la base de l'estimation de la pertinence, reconnu comme non pertinent lorsque les données de situation n'entrent pas dans la plage de validité du texte reconnu du signal supplémentaire associé.

3. Procédé selon la revendication 2, un contrôle étant effectué afin de vérifier si l'estimation de la pertinence reste constante ou non pour une modification à attendre des données de situation et, à défaut, une répétition de l'estimation de la pertinence est effectuée lorsque les données de situation changent.

4. Procédé selon l'une des revendications précédentes, les données de situation comprenant une heure actuelle.

5. Procédé selon l'une des revendications précédentes, les données de situation comprenant un jour de semaine actuel.

6. Procédé selon l'une des revendications précédentes, les données de situation comprenant une vitesse actuelle du véhicule.

7. Procédé selon la revendication 6, la vitesse actuelle étant dérivée d'une séquence d'images de la caméra.

8. Procédé selon l'une des revendications précédentes, les données de situation comprenant un poids du véhicule.

9. Procédé selon l'une des revendications précédentes, qui prend en compte des informations supplémentaires issues d'une carte numérique, d'un appareil de détermination de position et/ou d'autres capteurs de véhicule.

10. Dispositif configuré pour la reconnaissance mécanisée automatique de panneaux de signalisation, comprenant une caméra destinée à enregistrer au moins une image d'un environnement d'un véhicule, une unité d'interprétation d'image et une unité d'estimation de la pertinence, l'unité d'interprétation d'image étant configurée pour reconnaître la présence et la catégorie d'un ou plusieurs signaux principaux ainsi que la présence d'un ou plusieurs signaux supplémentaires associés au ou aux signaux principaux reconnu(s) à partir des données d'image enregistrées, l'unité d'interprétation d'image possédant une unité de reconnaissance de modèle et une unité de reconnaissance de texte, l'unité de reconnaissance de texte étant configurée pour lire et interpréter des informations de texte sous forme d'indications de temps, d'indications de distance ou d'indications de poids sur le signal supplémentaire, les indications de temps, les indications de distance ou les indications de poids pouvant varier avec différents signaux supplémentaires, un contrôle de cohérence du texte reconnu des deux signaux supplémentaires étant effectué dans le cas où deux signaux principaux de classification identique surviennent des deux côtés d'une route, un écart entre les contenus reconnus des signaux supplémentaires des deux côtés entraînant la prise d'une décision en vue de déterminer quel contenu reconnu est correct en fonction d'une fiabilité de la reconnaissance de modèle et/ou de la reconnaissance de texte, et l'unité d'estimation de la pertinence étant configurée pour comparer le texte reconnu avec des données de situation.
